# EUROPÄISCHE PATENTANMELDUNG

(11) **EP 4 693 077 A1**
(43) Veröffentlichungstag der Anmeldung: **11.02.2026**
(21) Anmeldenummer: 25192383.5
(22) Anmeldetag: 29.07.2025
(51) Int. Cl.: G06F 18/23, G06F 18/25, G06V 20/58

(54) **SENSIEREN EINES OBJEKTS DURCH GESAMTAUSWAHLRAHMEN**

(30) Priorität: 07.08.2024 DE 102024207472
(71) Anmelder: ZF Friedrichshafen AG, 88046 Friedrichshafen (DE)
(72) Erfinder: Altendorfer, Richard, 56072 Koblenz (DE); Shahare, Kunal, 490023 Bhilai (IN); Ganesh, Adam, 413005 Solapur (IN)
(74) Vertreter: ZF Friedrichshafen AG

(57) **Zusammenfassung**

Bei einem Verfahren zum Sensieren eines Objekts (10a,b) erfasst ein Sensor (12) zu wenigstens zwei Messzeitpunkten (t1-5) aktuelle Lagepunkte (P1-5,a-d) des Objekts (10a,b), und ein Rechenmodul (14) nimmt diese als Punktewolke (20) in ein Datenbild (22,22') auf und sensiert das Objekt (10a,b), indem es im Datenbild (22,22') alle Lagepunkte (P1-5,a-d) aller Messzeitpunkte (ta-5) anhand eines Gesamtkriteriums (24) durch einen Gesamtrahmen (GR) markiert, und alle Lagepunkte (P1-5,a-d) des jeweiligen Messzeitpunktes (t1-5) anhand eines mit dem Gesamtrahmen (GR) korrelierten Einzelkriteriums (26) durch einen Einzelrahmen (ER1-5) markiert.

Bei einem Verfahren zum Steuern eines Kraftfahrzeuges (2) wird mit Hilfe des Sensier-Verfahrens das Objekt (10a,b) sensiert und ein Aktuator (6) des Kraftfahrzeuges (2) in Bezug auf das sensierte Objekt (10a,b) angesteuert.

Ein Sensormodul (4) enthält den Sensor (12) und das Rechenmodul (14), um das Sensier-Verfahren auszuführen.

Ein Kraftfahrzeug (2) enthält das Sensormodul (4) und den Aktuator (6), um das Steuer-Verfahren auszuführen.

## Beschreibung

Die Erfindung betrifft einen Sensor, der dazu eingerichtet ist, Lagepunkte eines Objekts in einem Bezugssystem zu erfassen und bereitzustellen, um diese in Form einer Punktewolke in einem Datenbild aufnehmen und so sensieren zu können.

Aus der DE 10 2019 219 750 A1 ist ein Fahrerassistenzsystem bekannt zum Detektieren von Objektbarrieren in 3D-Punktewolken entlang einer Fahrzeugtrajektorie eines Fahrzeugs umfassend ein erstes Erfassungssystem zum Bereitstellen eines Umgebungsbildes entlang der Fahrzeugtrajektorie als erste 3D-Punktewolke in einer ersten Sensorart und ein zumindest zweites, zum ersten unterschiedliches Erfassungssystem zum Bereitstellen des im wesentlichen identischen Umgebungsbildes als eine, zu der ersten 3D-Punktewolke zeitsynchronen zweiten 3D-Punktewolke, in einer zweiten Sensorart, die sich von der ersten Sensorart in ihrem Messverfahren unterscheidet, ferner umfassend einen Prozessor, der dazu ausgebildet ist, ein Clusterverfahren auf die erste 3D-Punktewolke zur Erzeugung ein oder mehrerer erster Cluster anzuwenden, und das Clusterverfahren auf die zumindest eine zweite 3D-Punktewolke zur Erzeugung ein oder mehrerer zweiter Cluster anzuwenden, wobei der Prozessor ferner dazu ausgebildet ist, Ebenen durch die Konturpunkte eines jeweiligen ersten Clusters zu ermitteln und diese Ebenen als eine jeweils erste Zwischenschrittbarriere zusammenzuführen und Ebenen, durch die Konturpunkte eines jeweiligen zweiten Clusters zu ermitteln und diese Ebenen als eine jeweils zweite Zwischenschrittbarriere zusammenzuführen, wobei der Prozessor ferner dazu ausgebildet ist, eine jeweils erste Zwischenschrittbarriere mit einer jeweils zweiten Zwischenschrittbarriere mittels eines Assoziationsalgorithmus zu assoziieren, und eine jeweils erste Zwischenschrittbarriere mit der assoziierten zweiten Zwischenschrittbarriere zueinander als Objektbarriere zu fusionieren.

Aufgabe der Erfindung ist es, das Sensieren eines Objekts durch einen Sensor zu verbessern.

Die Aufgabe wird gelöst durch ein Verfahren gemäß Patentanspruch 1. Bevorzugte oder vorteilhafte Ausführungsformen der Erfindung sowie anderer Erfindungskategorien ergeben sich aus den weiteren Ansprüchen, der nachfolgenden Beschreibung sowie den beigefügten Figuren.

Das Verfahren dient zum Sensieren eines Objekts. Das Objekt befindet sich dabei in einem Bezugssystem, z.B. dem Koordinatensystem einer Umgebung, in der sich der Sensor befindet, z.B. dem Weltkoordinatensystem der natürlichen Umgebung.

Das Sensieren erfolgt mithilfe eines Sensors. "Sensieren" schließt im Sinne der Erfindung nicht nur die Detektion, sondern auch die Ortsverfolgung ("Tracking") des Objekts ein. Im Rahmen der Erfindung erfolgt das Sensieren mithilfe des Erzeugens von verschiedenen Auswahlrahmen, wie im Folgenden erläutert wird.

Zunächst erfasst der Sensor Lagepunkte des Objekts in dem Bezugssystem. Zur Bereitstellung des vollen Funktionsumfanges erfolgt die Erfassung zu wenigstens zwei unterschiedlichen Messzeitpunkten. An wenigstens zwei (unterschiedlichen) der Messzeitpunkte wird wenigstens ein aktueller (Messzeitpunkt) Lagepunkt des Objekts erfasst. Dabei sind auch zeitliche Lücken möglich, in denen kein Target (Lagepunkt) vom Objekt existiert. In einer nicht erfindungsgemäßen Variante, nämlich bei nur einem Messzeitpunkt, degradiert das Detektionsverfahren zu einem Standard-Objektdetektionsverfahren.

Die Lagepunkte sind insbesondere Messpunkte an dem Objekt, zum Beispiel ein "Punkt" bzw. Ort, an welchem ein Messstrahl des Sensors (z.B. Messstrahl eines Radarsensors) auf dem Objekt auftrifft. Pro Objekt sind hierbei mehrere unterschiedliche Messpunkte / Lagepunkte möglich, zum Beispiel wenn ein Messstrahl dasselbe Objekt hierbei an mehreren unterschiedlichen Messpunkten erfasst. Ein Radarsensor kann dabei auch eine Radialgeschwindigkeit erfassen / messen. Üblicherweise wird das Objekt im Rahmen des Verfahrens zu unterschiedlichen Messzeitpunkten dann an jeweils unterschiedlichen Messpunkten getroffen, so dass sich für das selbe Objekt innerhalb des Messzeitpunktes und / oder auch für unterschiedliche Messzeitpunkte unterschiedliche Lagepunkte ergeben können.

Ein Rechenmodul führt in dem Verfahren weiterhin folgende Schritte aus:
Das Rechenmodul nimmt die vom Sensor ermittelten Lagepunkte als Punktewolke ortsentsprechend in ein Datenbild des Bezugssystems auf. Mit anderen Worten wird eine Punktewolke bzw. Punktewolkendaten aus den Lagepunkten erzeugt. Die Erzeugung der Punktewolke kann dabei alternativ auch im Sensor (einschließlich Vorverarbeitung von Roh-Messdaten) erfolgen. Streng genommen ist dann ein Teil des Rechenmoduls mit dem Sensor integriert.

Das Rechenmodul sensiert das Objekt dadurch, dass es in dem Datenbild für das Objekt folgende Schritte ausführt:
Mindestens zwei, insbesondere alle, Lagepunkte aller Messzeitpunkte werden durch einen Gesamtrahmen markiert. Dies erfolgt anhand eines Gesamtkriteriums. Das Gesamtkriterium beschreibt also, nach welchen Kriterien der Gesamtrahmen in Bezug auf die Lagepunkte zu platzieren ist. Das Gesamtkriterium wird im Rahmen des Trainings des Objektdetektors gelernt und in den Parametern / Gewichten eines lernfähigen Netzes encodiert. Zur Inferenz wird das Gesamtkriterium anhand der Eingangsdaten und des festen trainierten Modells ausgewertet.

Weiterhin sensiert das Rechenmodul das Objekt dadurch, dass es für jeden der Messzeitpunkte (die dem Messzeitpunkt zugeordneten Lagepunkte) wie folgt vorgeht:
Die betreffenden, insbesondere alle, Lagepunkte des jeweiligen Messzeitpunktes eines bzw. des Objekts und nur diese sollen (Ziel ist, dass diese auch tatsächlich markiert werden) durch einen Einzelrahmen markiert werden. Mit dem gelernten Einzelkriterium kann in der Praxis jedoch - wie im Rahmen von Lernverfahren fachüblich bekannt - nicht garantiert werden, dass tatsächlich alle Lagepunkte des Objekts markiert werden. Es können Lagepunkte fehlen und es können sich Lagepunkte anderer Objekte in dem Einzelrahmen befinden. Dies geschieht anhand eines Einzelkriteriums, welches ebenfalls anhand der encodierten Eingangsdaten, den fest gelernten Modellparametern und dem Gesamtrahmen bewertet wird. Mit anderen Worten wird der zuvor bzw. aktuell gewählte Gesamtrahmen, dessen Lage, Größe etc.., im Einzelkriterium beachtet bzw. genutzt, um die Einzelrahmen zu platzieren. Das Wissen um den Gesamtrahmen stellt eine Art Vorwissen dar, z.B. wo die Lagepunkte innerhalb des Datenbildes in ihrer Gesamtheit liegen, welches erfindungsgemäß genutzt werden kann. Mit anderen Worten bildet der Gesamtrahmen bzw. dessen aktuell festgestellte Lage im Datenbild Anhaltspunkte / Hinweise für die Platzierung der Einzelrahmen.

Bei zum Beispiel fünf Messzeitpunkten ergeben sich also ein einziger Gesamtrahmen und fünf, jeweils einem der Messzeitpunkte zugeordnete Einzelrahmen.

Der Gesamtrahmen ist insbesondere eine konvexe Hülle aller Einzelrahmen. Das Gesamtkriterium und das Einzelkriterium werden durch maschinelle Lernverfahren ermittelt, auf Basis von Mess- und Referenzdaten.

Gemäß dem Verfahren ergibt sich eine Identifizierung / Detektion als Teil der Sensierung des Objekts in dem Datenbild bzw. der Punktewolke durch den Gesamtrahmen. Ein Tracking als Teil der Sensierung ist wiederum durch die dem Gesamtrahmen zugeordneten Einzelrahmen repräsentiert. Denn diese repräsentieren z.B. den "Weg" des Objekts über der Zeit (jeweilige Lage eines Einzelrahmens zum jeweiligen Messzeitpunkt), also dessen Bewegung oder Stillstand im Datenbild.

In einer bevorzugten Ausführungsform nimmt das Rechenmodul die Lagepunkte in ein 3D-Bild als Datenbild oder in ein 4D-Bild als Datenbild auf. Dies ist insbesondere davon abhängig, ob der Sensor 3D- oder 4D-Daten - als Ausgangssignal - bereitstellt bzw. bereitstellen kann (z.B.: 3D: (Radius, Azimuth, Elevation: nicht-FMCW Lidar), (Radius, Azimuth, Radialgeschwindigkeit: Radar Horizontalebene), z.B. 4D: (Radius, Azimuth, Elevation, Radialgeschwindigkeit: Radar oder FMCW Lidar)). Besondere Lidarsensoren, zum Beispiel FMCW-Lidare (frequency modulated continuous wave) oder auch Radarsensoren liefern dagegen auch Geschwindigkeitsdaten hinsichtlich der Objekte / Messpunkte, also Lagepunkte, sodass hier eine zusätzliche kinematische Dimension die Objektbewegung teilweise beschreibt.

Die Bezeichnung "3D" und "4D" sind vorliegend auch im Sinne von "2+1D" und "3+1D" zu verstehen, weil die Bezeichnung "3D" allgemein als 3D-Raumkoordinaten (x, y, z oder r, phi, theta) angenommen werden könnte und die Relativgeschwindigkeit außerhalb der mit Radar befassten Fachkreise ("Radar Community") nur schwer als eigene Dimension begriffen werden könnte.

Die Bilder können sich insbesondere auf die Horizontalebene, also zwei räumliche Dimensionen beziehen (Insofern entsteht grundlegend ein 2D-Bild, dessen dritte Dimension z.B. als Geschwindigkeitswert dann einem der Bildpunkte zugeordnet ist). Insbesondere ist auch die Verallgemeinerung auf räumliche 3D-Daten sinnvoll, besonders bei Lidaren und Radaren mit Elevation-Winkel-Messung. Wenn die radiale Geschwindigkeit in den Messraum hinzugenommen wird, ergibt sich z.B. 3D oder 4D. Die Dimensionsangabe kann sich dabei - je nach Auswahl der Größen für die jeweilige Dimension - auf die räumlichen Dimensionen oder auf den gesamten "Messraum" / "Messdaten", einschließlich auch nicht-räumlicher Dimensionen wie z.B. radialer Geschwindigkeit und ggf. anderer Messsignale wie Radar Cross Section, Lidar Intensität, ..., beziehen.

In einer bevorzugten Ausführungsform markiert das Rechenmodul die Lagepunkte mit einem horizontalen Rechteck / als Gesamtrahmen und / oder als Einzelrahmen (Einzelrahmen ggf. als unterschiedliche Rechtecke). Dabei findet insbesondere eine Detektion auf Rechtecken in der Horizontalebene statt. Eine Erweiterung auf räumliche Kuboide ist denkbar. Mit anderen Worten werden z.B. alle zur Verfügung stehenden Lagepunkte aller Messzeitpunkte mit einem einzigen Gesamtrahmen in Form eines räumlichen Rechtecks markiert. Zusätzlich werden die jeweiligen Lagepunkte eines jeweiligen Messzeitpunktes jeweils für sich durch ein räumliches Rechteck markiert. Die Markierungen erfolgen nach dem gelernten, komplexen Gesamt- oder Einzelkriterium und stellen somit eine nicht in allen Fällen garantierte Sollfunktionalität dar. Die Einzelrahmen sind eindeutig einem Gesamtrahmen zugeordnet und untereinander sortiert. Dies ermöglicht eine Geschwindigkeitsschätzung.

In einer bevorzugten Ausführungsform wird eine bestimmte Zeitpunktanzahl als Anzahl von streng monoton ansteigenden Messzeitpunkten gewählt. Zum Beispiel werden 3, 5, 8 oder 10 Messzeitpunkte als Anzahl für Messzeitpunkte gewählt. Nur diese Lagepunkte werden dann gemeinsam in einem Datenbild dargestellt.

Das Rechenmodul nimmt daher nur die Lagepunkte der Zeitpunktanzahl von Messzeitpunkten in das Datenbild auf. Mit anderen Worten werden also nur Lagepunkte über 3, 5, 8 oder 10 Messzeitpunkte in das Datenbild aufgenommen. Lagepunkte von weiteren zusätzlichen Messzeitpunkten sind dann nicht enthalten.

Dies geschieht dadurch: Beim Vorliegen eines weiteren (neueren, jüngeren) Messzeitpunktes, zum Beispiel bei einer Zeitpunktanzahl von drei, eines vierten Messzeitpunktes, wenn also "jüngere" bzw. "neuere" Lagepunkte zur Verfügung stehen, wird wie folgt vorgegangen:
Die neueren / neuesten Lagepunkte werden in das Datenbild aufgenommen. Dadurch übersteigt die Anzahl der Messzeitpunkte, von denen Lagepunkte aufgenommen sind, die Zeitpunktanzahl (Vier statt Drei im Beispiel). Daher werden die Lagedaten des ältesten / frühersten Messzeitpunktes aus dem Datenbild entfernt. Damit sind wieder nur Lagepunkte von drei Messzeitpunkten im Datenbild enthalten, die Zeitpunktanzahl also wieder eingehalten. Dabei spielt es keine Rolle, ob beim "Tausch" kurzfristig die Zeitpunktanzahl verletzt ist (Vier statt Drei oder Zwei statt Drei, falls erst die älteren Lagepunkte entfernt und dann die neueren aufgenommen werden). Für eine Inferenz bei einem lernfähigen Netz ist dies ohnehin prinzipiell unwichtig - dies beeinflusst nur die Güte (je kürzer eine Messreihe ist, desto potentiell ungenauer ist das Netz). Für ein Training eines solchen Netzes wäre es problematisch, wenn derartige Randbedingungen nicht im pre-processing entsprechend korrekt für den Anwendungsfall gehandhabt werden würden.

Mit anderen Worten werden also beim Aufnehmen von jüngsten Messdaten die jeweils ältesten Messdaten des ältesten Messzeitpunktes aus dem Datenbild entfernt. Somit entsteht ein sich über der Zeit weiterentwickelndes Datenbild, welches jeweils immer nur eine bestimmte Anzahl von Messzeitpunkten (Zeitpunktanzahl) abbildet, wobei bei der Aufnahme jüngerer Daten ältere Daten aus dem Datenbild entfernt werden.

In einer bevorzugten Ausführungsform ermittelt das Rechenmodul anhand von mindestens zwei Einzelrahmen eine Geschwindigkeit und / oder Beschleunigung (dann mindestens drei Einzelrahmen) des Objekts in dem Bezugssystem. Dies geschieht zum Beispiel durch Bewertung von Dimensionen, zum Beispiel der Position, Größe und Ausrichtung der Einzelrahmen, in welcher verschiedene Messzeitpunkte verschiedene Lagepunkte unterschiedlicher Messzeitpunkte angeordnet sind unter Beachtung der Zeitdifferenz zwischen jeweiligen Messzeitpunkten. Hierbei kann insbesondere die Tatsache genutzt werden, dass in dem Datenbild Messungen zu verschiedenen Zeitpunkten abgebildet sind und diese durch die verschiedenen Auswahlrahmen (Gesamt- und Einzel-) repräsentiert bzw. markiert sind.

In einer bevorzugten Variante dieser Ausführungsform erfasst der Sensor bei der Erfassung des Lagepunktes eine ambivalente Geschwindigkeitsmenge (ggf. zugehörige Beschleunigungen) für das Objekt. Mit anderen Worten handelt es sich hier also um einen "2+1 D" oder "3+1D"-Sensor (siehe die Erläuterungen oben), der auch Geschwindigkeiten des Objekts bezüglich der Lagepunkte vom Sensor ermitteln kann, zum Beispiel Radar- oder FMCW-Lidarsensoren. Eine ambivalente Geschwindigkeitsmenge bedeutet, dass der Sensor keine eindeutige Geschwindigkeit liefert oder liefern kann, sondern lediglich zum Beispiel bestimmte Vielfache von Grundgeschwindigkeiten, wobei zunächst unbekannt ist, welche Geschwindigkeit aus der Geschwindigkeitsmenge der Realität entspricht.

Das Rechenmodul wählt dann nach einem Geschwindigkeitskriterium eine Sensorgeschwindigkeit aus der Geschwindigkeitsmenge aus. Mit anderen Worten wird beurteilt, welche der mehrdeutigen radialen Relativgeschwindigkeiten der horizontalen oder räumlich 3-dimensionalen Geschwindigkeit und der Orientierung des Fahrzeuges / Verkehrsteilnehmers am besten entspricht.

Insbesondere gilt: Durch das Tracking über den Gesamtrahmen kann eine horizontale Geschwindigkeit geschätzt werden. Mit dieser Geschwindigkeitsschätzung kann die Mehrdeutigkeit der radialen Geschwindigkeitsmessung aufgelöst werden. Die gemessene radiale Geschwindigkeit ist im Allgemeinen genauer/weniger verrauscht als die geschätzte, auf die radiale Richtung projizierte Geschwindigkeit. Prinzipiell ist aber durch ein, der Detektion nachgeschaltetes separates Tracking keine Geschwindigkeitsmessung zur Schätzung der Geschwindigkeit mehr notwendig.

Das Rechenmodul ermittelt anschließend anhand der nunmehr ausgewählten Sensorgeschwindigkeit aus der vom Sensor gelieferten Geschwindigkeitsmenge eine Korrekturgeschwindigkeit des Objekts. Im Ergebnis wird die Ambivalenz der Geschwindigkeitsmessung aufgelöst und die Korrekturgeschwindigkeit mit der über die Einzelrahmen gemittelten Geschwindigkeit fusioniert. Das Fusionsergebnis stellt eine genauere Geschwindigkeitsschätzung dar.

In einer bevorzugten Ausführungsform weist das Rechenmodul - falls wenigstens zwei Objekte vorhanden sind - dann jedem der Objekte eine eindeutige Kennung zu und weist diese Kennung auch den Lagepunkten der jeweiligen Objekte zu. Somit können im Verfahren auch mehrere Objekte sensiert, das heißt detektiert und verfolgt / getrackt werden.

Die Aufgabe der Erfindung wird auch gelöst durch ein Verfahren gemäß Patentanspruch 8 zum Steuern eines Kraftfahrzeuges. Das Kraftfahrzeug enthält den oben genannten Sensor und das oben genannte Rechenmodul und darüber hinaus einen Aktuator. Das Verfahren dient zum Steuern des Kraftfahrzeuges in einer Umgebung, wobei die Umgebung das oben genannte Objekt enthält. Bei dem Verfahren wird mithilfe des oben genannten Verfahrens das Objekt sensiert. Der Aktuator wird in Bezug auf das sensierte Objekt angesteuert. Somit lässt sich das Verfahren in einem Kraftfahrzeug nutzen. Der Aktuator ist beispielsweise ein Bremssystem eines Kraftfahrzeuges, das Objekt ein sensierter Fußgänger. Der Aktuator wird dann derart angesteuert, dass das Kraftfahrzeug abgebremst wird, um eine Kollision mit dem Fußgänger zu vermeiden.

Das Verfahren und zumindest ein Teil dessen möglicher Ausführungsformen sowie die jeweiligen Vorteile wurden sinngemäß bereits im Zusammenhang mit dem erfindungsgemäßen Verfahren zum Sensieren des Objekts erläutert.

Die Aufgabe der Erfindung wird auch gelöst durch ein Sensormodul gemäß Patentanspruch 9. Dieses enthält den oben genannten Sensor und das oben genannte Rechenmodul. Das Sensormodul ist dazu eingerichtet, das oben genannte Verfahren zum Sensieren des Objekts auszuführen.

Das Sensormodul und zumindest ein Teil dessen möglicher Ausführungsformen sowie die jeweiligen Vorteile wurden sinngemäß bereits im Zusammenhang mit den erfindungsgemäßen Verfahren erläutert.

Die Aufgabe der Erfindung wird auch gelöst durch ein Kraftfahrzeug gemäß Patentanspruch 10. Dieses enthält das erfindungsgemäße Sensormodul und den oben genannten Aktuator und ist dazu eingerichtet, das oben genannte Verfahren zum Steuern des Kraftfahrzeuges auszuführen.

Das Kraftfahrzeug und zumindest ein Teil dessen möglicher Ausführungsformen sowie die jeweiligen Vorteile wurden sinngemäß bereits im Zusammenhang mit den erfindungsgemäßen Verfahren und dem erfindungsgemäßen Sensormodul erläutert.

Die Erfindung beruht auf folgenden Erkenntnissen, Beobachtungen bzw. Überlegungen und weist noch die nachfolgenden bevorzugten Ausführungsformen auf. Diese Ausführungsformen werden dabei teils vereinfachend auch "die Erfindung" genannt. Die Ausführungsformen können hierbei auch Teile oder Kombinationen der oben genannten Ausführungsformen enthalten oder diesen entsprechen und/oder gegebenenfalls auch bisher nicht erwähnte Ausführungsformen einschließen.

Gemäß der Erfindung ergibt sich ein Verfahren zur Detektion und zum Tracking von Objekten, basierend auf Punktwolkendaten.

Kernmerkmal der Erfindung ist ein kombinierter Detektor und Tracker von Objekten basierend auf Punktwolkendaten von z.B. Radar- und Lidar-Sensoren, das heißt
1. eine Erweiterung eines akkumulierenden Zeitrahmen-Detektors, um eine Verfolgung zu ermöglichen und der folglich
2. Geschwindigkeitsmehrdeutigkeiten auflösen kann, die z.B. in FMCW Sensor-Signalverarbeitungssystemen auftreten.

Idee der Erfindung ist eine Gesamtrahmen-Detektion (super bounding box) und Tracking auf Radar- und Lidar-Punktewolken.

Die Erfindung beruht auf der Erkenntnis des folgenden Problems:
Zur Bestimmung der dynamischen Umgebung müssen potentiell bewegte Objekte (PMOs (potentially moving objects): Kraftfahrzeuge (PKWs), Lastkraftwagen LKWs, VRUs (vulnerable road users), ...,) sowohl detektiert (Detektion: Identifikation eines Objekts zu einem bestimmten Zeitpunkt) als auch verfolgt werden (Tracking: Bestimmung zumindest der Position eines Objekts über einen längeren Zeitraum unter Beibehaltung einer eindeutigen Kennung für dieses Objekt). Diese dynamische Umgebung ist eine Voraussetzung und Input für autonome Fahrfunktionen wie die Routenverfolgung.

Um die Leistung zu verbessern und das volle Potenzial aller Sensordaten zu nutzen, wurden Detektoren basierend auf tiefen neuronalen Netzen (DNN) für Kamera-, Lidar- und Radarsensoren in der Literatur vorgeschlagen. Diese Detektoren können mit traditionellen Verfolgungsalgorithmen wie z.B. Kalman-Filtern kombiniert werden oder in DNNs integriert werden, die sowohl Erkennung als auch Verfolgung durchführen.

Für die Erkennung und Verfolgung auf der Grundlage von Radar-Punktwolkendaten gibt es mehrere sensorspezifische Herausforderungen
- Radarsensoren können nur die relative Radialgeschwindigkeit messen, die vollständige 2D- oder 3D-Geschwindigkeit muss durch Verfolgung bestimmt werden
- Viele Radarsensoren liefern keine eindeutige Radialgeschwindigkeit, sondern eine potenziell unendliche Anzahl von mehrdeutigen Radialgeschwindigkeiten, die sich um ein Vielfaches eines festen Geschwindigkeitsintervalls unterscheiden (velocity ambiguity range)
- Für die DNN-basierte Erkennung und Verfolgung ist die Radarpunktwolke zu spärlich (sparse), um richtig verarbeitet zu werden und wird in der Regel unterstützt durch Kombination der Punktwolken mehrerer aufeinanderfolgender Erfassungszeitpunkte n (typischerweise n=5-10): Punktwolkenakkumulation. Dies führt zu einer zeitlich unterschiedlichen Punktwolke mit Artefakten wie "Spuren" von sich bewegenden Objekten.

Für die Detektion und Verfolgung auf der Grundlage von Lidar-Punktwolkendaten gibt es ebenfalls mehrere sensorspezifische Herausforderungen
- Standard-Lidarsensoren können keine relative Geschwindigkeit messen, sondern nur die relative Position
- FMCW-Lidar-Sensoren können Radialgeschwindigkeiten messen, wie die oben genannten Radarsensoren
- Auch die FMCW-Lidar-Radialgeschwindigkeit ist mehrdeutig.

Die Erfindung beruht auf folgender Idee zur Problemlösung:
Ein kombinierter Detektor und Tracker ist eine Erweiterung eines (Ein-Zeitschritt-) Detektors.

Durch den integrierten Tracker kann die Geschwindigkeitsmehrdeutigkeit aufgelöst und eine vollständige 2D- oder sogar 3D-Geschwindigkeit (je nach den räumlichen Messmöglichkeiten des Sensors) geschätzt werden.

Die Punktwolkenakkumulation, die als notwendiges Hilfsmittel für die Punktwolkenverdichtung eingeführt wurde, ist ein Schlüsselmerkmal für den folgenden Ansatz:
1. Erkennen von "Super Bounding Boxes" (Gesamtrahmen) auf der in n Zeitschritten akkumulierten Punktwolke: Bei sich bewegenden Objekten stimmt diese Bounding Box nicht mit der geometrischen Bounding Box überein, sondern enthält "Spuren" (trails) aufgrund der Trajektorie des Objekts über n Zeitschritte.
   a. Training von Tracking-Algorithmen: dies erfordert konstante Objekt-IDs über die gesamte Lebensdauer der Objekte in den wahren auf den Boden / Bezugssystem bezogenen Daten (ground truth data).
2. Erkennung von bis zu n "normalen" Bounding Boxen (Einzelrahmen) von Punkten (Lagepunkte) aus jedem Zeitschritt n, der Gesamtrahmen wird dabei als konvexe Hülle der Einzelrahmen bestimmt. Alternativ kann auch ein kleinstmögliches einhüllendes Rechteck gebildet oder eine komplexere geometrische Form durch ein Tracking-Verfahren (mit physikalischem Fahrzeugmodell) auf den Einzelrahmen gebildet werden.
3. Basierend auf der Trajektorie mit n Positionen kann die vollständige 2D/3D-Relativgeschwindigkeit und -beschleunigung geschätzt werden (z. B. durch ein klassisches Kalman Filter Tracking mit Fahrzeugmodell oder Glätter (vor- und rückwärts)) und die Identität des Objekts wird über diese n Zeitschritte beibehalten.
   a. Mit Hilfe der Geschwindigkeitsschätzung kann die Mehrdeutigkeit der Radialgeschwindigkeit (ambivalente Geschwindigkeitsmenge) aufgelöst werden und die gemessene Radialgeschwindigkeit mit der durch das Tracking geschätzten 2D/3D-Geschwindigkeit fusioniert werden.
4. Da die n-Zeitschritt-Punktwolke in jedem Zeitschritt aktualisiert wird, indem die neue, jüngste Punktwolke aufgenommen und die älteste Punktwolke verworfen wird, kann die Objekt-ID über mehr als n Zeitschritte hinweg beibehalten werden.

Dieser Ansatz wird nochmals wie folgt zusammengefasst:
- Auf die akkumulierten Punktewolke (Datenbild) wird ein Detektor angewendet, um eine super-bounding-box (Gesamtrahmen) zu ermitteln. Die Zeitschritte sind notwendig sowohl für die Einzelrahmen als auch die Aufeinanderfolge der Einzelrahmen im Gesamtrahmen. Generell muss die Zeitschritt ID Information aber schon genutzt werden, da bei vorausfahrenden und entgegenkommenden Fahrzeugen die Reihenfolgen der Einzelrahmen innerhalb des Gesamtrahmens umgekehrt sind.
- Die Einzelrahmen werden von den Detektoren auch auf der akkumulierten Punktwolke bestimmt. Die Einzelrahmen werden von Detektoren erzeugt, welche auf die Kenntnis / Hinweise durch die super bounding box gestützt ("cued") sind.

Weitere Merkmale, Wirkungen und Vorteile der Erfindung ergeben sich aus der nachfolgenden Beschreibung eines bevorzugten Ausführungsbeispiels der Erfindung sowie den beigefügten Figuren. Dabei zeigen, jeweils in einer schematischen Prinzipskizze:
- Figur 1: Ein Kraftfahrzeug in einer Umgebung mit einem Objekt bei der Sensierung des Objekts,
- Figur 2a: ein alternatives Datenbild mit Punktewolke und Gesamtrahmen, sowie
- Figur 2b: Gesamtrahmen und Einzelrahmen,
- Figur 3: ein Blockdiagramm zur Markierung eines Datenbildes mit Gesamtrahmen und Einzelrahmen.

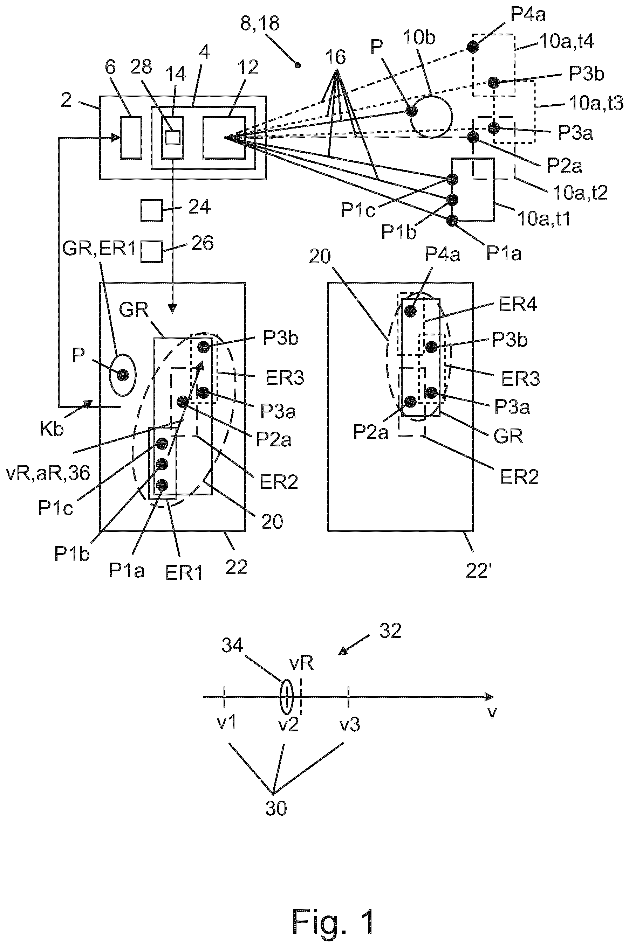

Figur 1 zeigt ein Kraftfahrzeug 2. Dieses enthält ein Sensormodul 4 und einen Aktuator 6, hier ein Bremssystem. Das Kraftfahrzeug 2 befindet sich bzw. bewegt sich in einer Umgebung 8, hier auf einer Straße bzw. in einer Straßenumgebung. In der Umgebung 8 befindet sich ein Objekt 10a, hier ein Fußgänger sowie in Objekt 10b, hier ein Hund. Der Umgebung 8 ist ein Bezugssystem 18 zugeordnet, hier das Weltkoordinatensystem, in welchem sich somit auch das Objekt 10a befindet.

Das Sensormodul 4 enthält einen Sensor 12, hier einen Lidarsensor, und ein Rechenmodul 14. Im Betrieb ist der Sensor 12 dazu eingerichtet, Messstrahlen 16, hier Laserstrahlen auszusenden, um generell Objekte, hier also die Objekte 10a,b, zu sensieren. Am Beispiel des Objekts 10a wird erläutert, wie mithilfe des Sensors 12 ein Verfahren zum Sensieren des Objekts 10a wie folgt durchgeführt wird:
Zu einem ersten Messzeitpunkt t1 (In den Figuren sind Elemente für verschiedene Messzeitpunkte t1-4 durchgezogen oder durch verschiedene Schraffierungen / Strichelungen dargestellt) erfasst der Sensor 12 drei Lagepunkte P1a-c des Objekts 10a. Dies geschieht dadurch, dass der Sensor 12 Messwellen oder Messstrahlen 16 (je nach z.B. Lidar oder Radar) aussendet, von welchen die drei dargestellten an den Lagepunkten P1a-c an dem Objekt 10a auftreffen und somit Messpunkte an diesem darstellen. Die Lagepunkte P1a-c werden in dem Bezugssystem 18 erfasst.

Zu einem zweiten Messzeitpunkt t2 (gestrichelt dargestellt) hat sich das Objekt 10 in der Umgebung 8 bzw. im Bezugssystem 18 bewegt. Zum zweiten Messzeitpunkt t2 erfolgt eine erneute Messung / Scan des Sensors 12. Diesmal trifft nur einer der Messstrahlen 16 das Objekt 10a, es ergibt sich ein Lagepunkte P2a am Objekt 10a. Zu einem dritten Messzeitpunkt t3 ergeben sich in dieser Art zwei Lagepunkte P3a,b.

Das Rechenmodul 14 nimmt nun die Lagepunkte P1a bis P3b der Messzeitpunkte t1-3 als Punktewolke 20 (durch Strichelung angedeutet) in ein Datenbild 22 des Bezugssystems 18 auf. Dies geschieht ortsentsprechend, das heißt die geometrischen Orte der Lagepunkte P1a bis P3b im Bezugssystem 18 entsprechen eindeutig geometrischen Orten in dem Datenbild 22.

Anschließend sensiert das Rechenmodul 14 das Objekt 10 dadurch, dass es in dem Datenbild 22 für das Objekt 10 alle Lagepunkte P1a bis P3b aller Messzeitpunkte T1-3 anhand eines Gesamtkriteriums 24 durch einen Gesamtrahmen GR markiert. Das Gesamtkriterium 24 besteht hier darin, den Gesamtrahmen GR mit Hilfe des Gesamtkriteriums im Bezug zu den betreffenden Lagepunkten P1a bis P3b zu platzieren.

Weiterhin sensiert das Rechenmodul 14 das Objekt 10 dadurch, dass es für jeden einzelnen der Messzeitpunkte t1 bis t3 die jeweiligen Lagepunkte P1..., P2..., P3... des jeweiligen Messzeitpunktes t1, t2 und t3 durch einen jeweiligen Einzelrahmen ER1-3 markiert bzw. versucht, zu markieren (eine Detektion muss nicht erfolgreich sein).

Die Einzelrahmen ER1-3 platziert das Rechenmodul 14 hierbei anhand eines Einzelkriteriums 26, welches sich auch an dem Gesamtrahmen GR orientiert. Mit anderen Worten bildet der Gesamtrahmen GR bzw. dessen aktuell festgestellte Lage im Datenbild 22 Anhaltspunkte / Hinweise für die Platzierung der Einzelrahmen ER1-3.

Im vorliegenden Ausführungsbeispiel ist der Sensor 12 zunächst ein 3D-Sensor (radialer Abstand, Azimuth, Elevation), kann also keinerlei Geschwindigkeitsinformationen des Objekts 10a in Bezug auf den Sensor 12 als Sensordaten liefern. Das Datenbild 22 ist ein 2D-Bild und die Gesamtrahmen GR und Einzelrahmen ER1-3 sind 2D-Rechtecke.

In der bisher geschilderten Ausführungsform ist in dem Verfahren eine Zeitpunktanzahl 28 von "n=3" gewählt. Das heißt, dass stets nur Lagepunkte P... von drei aufeinanderfolgenden Messzeitpunkten, hier den Messzeitpunkten ta-3 im Datenbild 22 vorhanden / aufgenommen sind. Nur die entsprechenden Lagepunkte gemäß Zeitpunktanzahl 28 von drei Messzeitpunkten werden also in das Datenbild 22 von dem Rechenmodul 14 aufgenommen. Dies geschieht wie folgt:
Figur 1 illustriert, dass der Sensor 12 fortlaufend zu weiteren Messzeitpunkten t Lagepunkte P ermittelt. Im Beispiel wird daher zu einem vierten Messzeitpunkt t4 ein weiterer Lagepunkt P4a aufgenommen. Das Rechenmodul 14 geht nun wie folgt vor: Es nimmt von jüngsten Messzeitpunkt t4 den Lagepunkt P4a in das Datenbild 22 (22') auf. Nun liegt die Zeitpunktanzahl der in das Datenbild 22 aufgenommenen Messzeitpunkte (t1-4) jedoch bei n=4 und damit über der Zeitpunktanzahl 28 von "3". Das Rechenmodul 14 entfernt deshalb die Lagepunkte P1a-c des ältesten Messzeitpunktes t1 aus dem Datenbild 22. Nun enthält das Datenbild 22' wiederum nur Lagepunkte P der Zeitpunktanzahl 28 von n=3 Messzeitpunkten t2-4. In Figur 1 ist dies durch das Datenbild 22' illustriert.

Anhand der Einzelrahmen ER1-3 ermittelt das Rechenmodul 14 außerdem eine Geschwindigkeit vR und eine Beschleunigung aR (in Figur 1 beides durch einen Pfeil angedeutet) des Objekts 10, basierend eben auf der Auswertung der Einzelrahmen ER1-3 und der betreffenden Messzeitpunkte ta-3 in dem Bezugssystem 18.

In einer alternativen Ausführungsform (nicht getrennt in den Figuren dargestellt) ist der Sensor 12 ein Radarsensor. Neben den Lagepunkten P wie oben dargestellt erfasst der Sensor 12 eine ambivalente Geschwindigkeitsmenge 30 von dem Objekt 10. Dies bedeutet, dass insgesamt drei unterschiedliche Geschwindigkeiten v1-3 in der Geschwindigkeitsmenge 30 enthalten sind, welche nicht eindeutig sind. Der Sensor 12 ist also lediglich in der Lage anzugeben, dass das Objekt 10a wohl eine der drei Geschwindigkeiten v1-3 aufweist, jedoch nicht welche genau. In Figur 1 ist dies symbolisch auf einer Achse von Geschwindigkeiten v aufgetragen.

Zur Erläuterung: Bei Geschwindigkeitsmehrdeutigkeiten gibt es pro Zeitschritt potentiell unendlich viele Geschwindigkeitsmöglichkeiten, tatsächlich gibt es in Abhängigkeit des Ambiguity Ranges unter Berücksichtigung der physikalisch maximal möglichen Geschwindigkeit (z. B. bei Autos ca. 250 km/h) eine endliche Anzahl N von Geschwindigkeitsmöglichkeiten. Bei drei Messungen gibt es also dreimal N Geschwindigkeiten. Methoden der Geschwindigkeitsauflösung: 1. über das Tracking: über die Positionsdifferenz zwischen zwei Zeitschritten kann eine Geschwindigkeit approximiert werden, dann wird die Geschwindigkeitsmöglichkeit ausgewählt, die der Geschwindigkeitsapproximation am nächsten ist. 2. über das Tracking: gleiche ID: die Ambiguity Ranges sind üblicherweise alternierend unterschiedlich über aufeinanderfolgende Zeitschritte. Über diese Alternierung ist im Allgemeinen nur eine Geschwindigkeitsmöglichkeit konsistent. Diese Verfahren sind fachüblich und sollen hier nicht weiter vertieft werden.

Anhand der mit Hilfe der Einzelrahmen ER1-3 ermittelten Geschwindigkeit vR (ggf. auch der Beschleunigung aR) wählt das Rechenmodul 14 nun aus der Geschwindigkeitsmenge 30 anhand eines Geschwindigkeitskriterium 32 eine der Geschwindigkeiten va-3, hier die Geschwindigkeit v2 als Sensorgeschwindigkeit 34 aus. Das Geschwindigkeitskriterium 32 ist hier die der Geschwindigkeit vR nächstliegende Geschwindigkeit v1-3. Die gemessene Geschwindigkeit kann nun mit der durch das Tracking geschätzten 2D/3D-Geschwindigkeit fusioniert werden, um zur Korrekturgeschwindigkeit 36 des Objekts 10a zu gelangen (in Figur 1 nicht gesondert dargestellt.)

Figur 1 zeigt außerdem eine weitere Ausführungsform des Verfahrens. Der Sensor 12 erfasst Lagepunkte P zu den Messzeitpunkten t1-4 auch von dem zweiten Objekt 10b (in Figur 1 nur symbolisch angedeutet. Das Rechenmodul 14 weist hier bei jedem der Objekte 10a,b eine eindeutige Kennung Ka,b zu. Die Kennung ist eine Konsequenz des Gesamtrahmens bzw. der dem Gesamtrahmen zugeordneten Einzelrahmen. Somit können beide Objekte 10a,b anhand ihrer Kennungen Ka,b in Datenbild 22 hinsichtlich ihrer zeitlichen Bewegungen anhand des Gesamtrahmen GR nachverfolgt / getrackt werden.

Vorliegend wird außerdem ein Verfahren zum Steuern des Kraftfahrzeuges 2 durchgeführt. Dabei werden mithilfe des bereits oben erläuterten Sensier-Verfahrens die Objekte 10a,b sensiert. Der Aktuator 6 wird dann in Bezug auf die sensierten Objekte 10a,b angesteuert. Hier wird das Kraftfahrzeug 2 abgebremst, um eine Kollision mit den Objekten 10a,b zu verhindern.

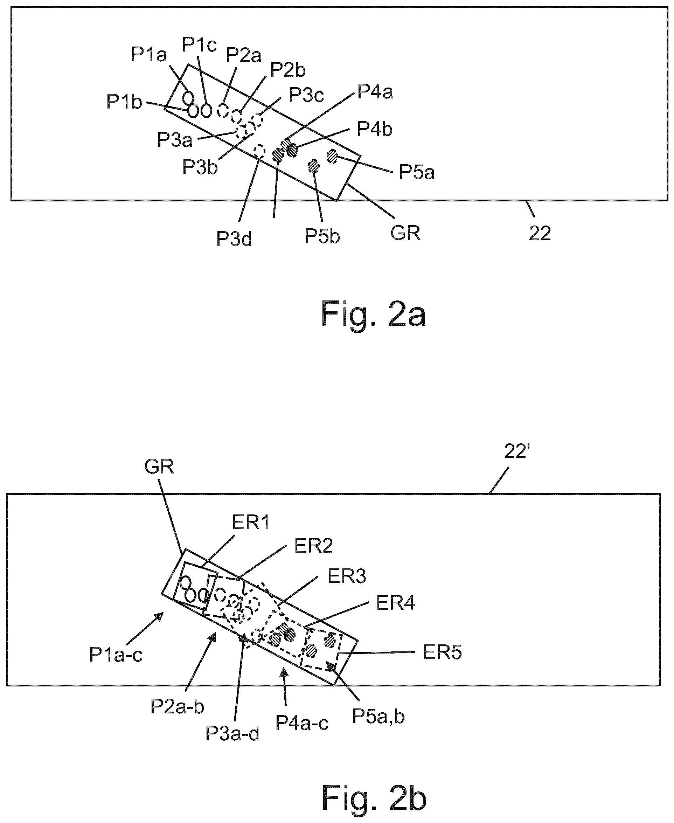

Figur 2a zeigt ein alternatives Datenbild 22 mit einer alternativen Punktewolke 20 sowie einen von dem Rechenmodul 14 platzierten Gesamtrahmen GR. Hier ist eine Zeitpunktanzahl 28 von "5" gewählt, sodass insgesamt Lagepunkte P1-5a-d erfasst sind.

Figur 2b zeigt für diese Situation die Platzierung der Einzelrahmen ER1-5 (Messzeitpunkte t1-5) unter Zuhilfenahme des Gesamtrahmens GR.

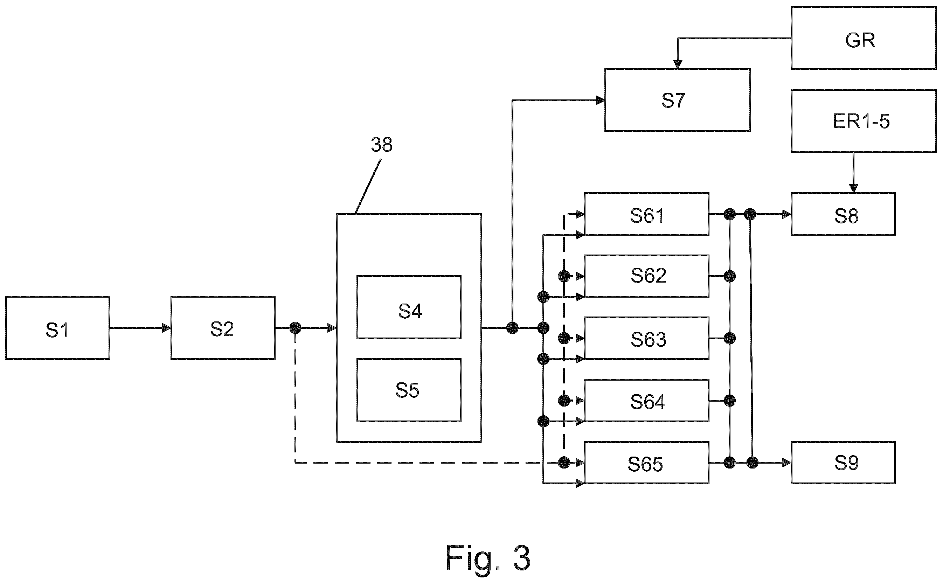

Figur 3 zeigt in einem Blockdiagramm den Verfahrensablauf zum Sensieren der Objekte in Form der Platzierung des Gesamtrahmens GR und der Einzelrahmen ER1-5.

In einem Schritt S 1 wird zunächst die kumulierte Punktewolke 20 vom Sensor 12 erfasst und bereitgestellt. In einem Schritt S 2 wird die Punktewolke 20 einem Sub-Netz (Backbone) zur Verfügung gestellt. Mithilfe eines (ankerbasierten) Rechenkopfes 38 ("(anchor based) head") erfolgt in einem Schritt S4 eine Regression von Gesamtrahmen GR und Einzelrahmen ER1-5 (bounding box - BB Regression). In einem Schritt S5 erfolgt eine Objektklassifikation, d.h. Zuordnung der Objekte zu Objektklassen.

In Schritten S61 bis S65 erfolgt jeweils die Nachführung / Verfeinerung der Einzelrahmen ER1-5, inkl. der Schätzung der jeweiligen Existenzwahrscheinlichkeit, zu jedem Zeitschritt (wichtig für die Geschwindigkeitsberechnung). Die Eingänge zu S7-S9 werden als Ausgänge des Systems bei Inferenz verwendet, insbesondere wird bei S7 der Gesamtrahmen, bei S8 die Einzelrahmen und bei S9 die mittlere 2D Geschwindigkeit über die Einzelrahmen ausgegeben.

Beim überwachten Training werden in S7-S9 Kostenfunktionen im Bezug auf die Referenzdaten ausgewertet und über den Verlauf des Trainings minimiert. Die Referenzdaten bei S8 sind die auf die Horizontalebene projizierten Rechtecke der abstrahierten Verkehrsteilnehmer ER1-5, bei S7 die kleinste konvexe Hülle GR, z. B. ein Rechteck, um die Einzelrechtecke, die zum gleichen Objekt gehören, und bei S9 die über die in diesem Beispiel 5 Zeitschritte gemittelte Referenz-Horizontalgeschwindigkeit des Objekts (basierend auf ER1-5).

### Bezugszeichen

- 2: Kraftfahrzeug
- 4: Sensormodul
- 6: Aktuator
- 8: Umgebung
- 10a,b: Objekt
- 12: Sensor
- 14: Rechenmodul
- 16: Messstrahl
- 18: Bezugssystem
- 20: Punktewolke
- 22,22': Datenbild
- 24: Gesamtkriterium
- 26: Einzelkriterium
- 28: Zeitpunktanzahl
- 30: Geschwindigkeitsmenge
- 32: Geschwindigkeitskriterium
- 34: Sensorgeschwindigkeit
- 36: Korrekturgeschwindigkeit
- 38: Rechenkopf

- t1-5: Messzeitpunkt
- P1-5,a-d: Lagepunkt
- GR: Gesamtrahmen
- ER1-5: Einzelrahmen
- vR: Geschwindigkeit (Rahmen)
- aR: Beschleunigung (Rahmen)
- v1-3: Geschwindigkeit (Geschwindigkeitsmenge)
- Ka,b: Kennung
- S1-9: Schritt

## Patentansprüche

1. Verfahren zum Sensieren eines sich in einem Bezugssystem (18) befindenden Objekts (10a,b) mit Hilfe eines Sensors (12), bei dem:
- der Sensor (12) zu wenigstens zwei Messzeitpunkten (t1-5) am jeweiligen Messzeitpunkt (t1-5) wenigstens einen aktuellen Lagepunkt (P1-5,a-d) des Objekts (10a,b) in dem Bezugssystem (18) erfasst und bereitstellt,
- ein Rechenmodul (14) :
- die Lagepunkte (P1-5,a-d) als Punktewolke (20) ortsentsprechend in ein Datenbild (22,22') des Bezugssystems (18) aufnimmt,
- das Objekt (10a,b) dadurch sensiert, dass es in dem Datenbild (22,22') für das Objekt (10a,b):
- alle Lagepunkte (P1-5,a-d) aller Messzeitpunkte (ta-5) anhand eines Gesamtkriteriums (24) durch einen Gesamtrahmen (GR) markiert, und
- für jeden der Messzeitpunkte (t1-5) jeweils alle Lagepunkte (P1-5,a-d) des jeweiligen Messzeitpunktes (t1-5) anhand eines mit dem Gesamtrahmen (GR) korrelierten Einzelkriteriums (26) durch einen Einzelrahmen (ER1-5) markiert.

2. Verfahren nach Anspruch 1,
**dadurch gekennzeichnet, dass**
das Rechenmodul (14) die Lagepunkte (P1-5,a-d) in ein 3D oder 4D Bild als Datenbild (22,22') aufnimmt.

3. Verfahren nach einem der vorhergehenden Ansprüche,
**dadurch gekennzeichnet, dass**
das Rechenmodul (14) die Lagepunkte (P1-5,a-d) mit einem 2D-Rechteck als Gesamtrahmen (GR) und / oder als Einzelrahmen (ER) markiert.

4. Verfahren nach einem der vorhergehenden Ansprüche,
**dadurch gekennzeichnet, dass**
- eine Zeitpunktanzahl (28) von streng monoton ansteigenden Messzeitpunkten (t1-5) gewählt wird, und
- das Rechenmodul (14)
- nur die Lagepunkte (P1-5,a-d) der Zeitpunktanzahl (28) von Messzeitpunkten (t1-5) in das Datenbild (22,22') aufnimmt, indem es:
- beim Aufnehmen von Lagepunkten (P1-5,a-d) eines über der Zeitpunktanzahl (28) liegenden jüngsten Messzeitpunktes (t1-5)
- die Messpunkte (P1-5,a-d) des ältesten Messzeitpunktes (t1-5) entfernt.

5. Verfahren nach einem der vorhergehenden Ansprüche,
**dadurch gekennzeichnet, dass**
das Rechenmodul (14) anhand von mindestens zwei Einzelrahmen (ER1-5) eine Geschwindigkeit (vR) und/oder anhand von mindestens drei Einzelrahmen (ER1-5) eine Beschleunigung (aR) des Objekts (10a,b) in dem Bezugssystem (18) ermittelt.

6. Verfahren nach Anspruch 5,
**dadurch gekennzeichnet, dass**
- der Sensor (12) bei der Erfassung des Lagepunktes (P1-5,a-d) eine ambivalente Geschwindigkeitsmenge (30) für das Objekt (10a,b) erfasst,
- das Rechenmodul (14) anhand der ermittelten Geschwindigkeit (vR) und/oder Beschleunigung (aR) nach einem Geschwindigkeitskriterium (32) eine Sensorgeschwindigkeit (34) aus der Geschwindigkeitsmenge (30) auswählt.

7. Verfahren nach einem der vorhergehenden Ansprüche,
**dadurch gekennzeichnet, dass**
- das Rechenmodul (14) bei Vorhandensein von wenigstens zwei Objekten (10a,b) jedem der Objekte (10a,b) eine eindeutige Kennung (Ka,b) zuweist und die Kennung (Ka,b) auch den Lagepunkten (P1-5,a-d) der jeweiligen Objekte (10a,b) zuweist.

8. Verfahren zum Steuern eines Kraftfahrzeuges (2), das den Sensor (12) und das Rechenmodul (14) nach einem der vorhergehenden Ansprüche und einen Aktuator (6) enthält, in einer Umgebung (8), die das Objekt (10a,b) nach einem der vorhergehenden Ansprüche enthält, bei dem:
- mit Hilfe des Verfahrens nach einem der vorhergehenden Ansprüche das Objekt (10a,b) sensiert wird,
- der Aktuator (6) in Bezug auf das sensierte Objekt (10a,b) angesteuert wird.

9. Sensormodul (4), mit dem Sensor (12) und dem Rechenmodul (14) nach einem der Ansprüche 1 bis 7, wobei das Sensormodul (4) dazu eingerichtet ist, das Verfahren nach einem der Ansprüche 1 bis 7 auszuführen.

10. Kraftfahrzeug (2), mit dem Sensormodul (4) nach Anspruch 9 und dem Aktuator (6) nach Anspruch 8, das dazu eingerichtet ist, das Verfahren nach Anspruch 8 auszuführen.
